# EUROPÄISCHE PATENTSCHRIFT

(11) **EP 4 114 736 B1**
(45) Veröffentlichungstag und Bekanntmachung des Hinweises auf die Patenterteilung: **21.02.2024**
(21) Anmeldenummer: 21714315.5
(22) Anmeldetag: 02.03.2021
(51) Int. Cl.: B64D 11/06, B60N 2/00, B60N 2/90, B60N 3/06, B64D 25/04

(54) **BEINAUFLAGE EINES FLUGGASTSITZES MIT EINER VORRICHTUNG**
LEG REST FOR AN AIRCRAFT PASSENGER SEAT, COMPRISING A DEVICE
REPOSE-JAMBES POUR SIÈGE PASSAGER D'AÉRONEF COMPRENANT UN DISPOSITIF

(30) Priorität: 05.03.2020 DE 102020106033
(43) Veröffentlichungstag der Anmeldung: 11.01.2023
(73) Patentinhaber: ZIM Aircraft Seating GmbH, 88090 Immenstaad am Bodensee (DE)
(72) Erfinder: JENSEN, Alexander, 88046 Friedrichshafen (DE); DITTRICH, Marc, 88279 Amtzell (DE)
(74) Vertreter: Otten, Roth, Dobler & Partner mbB Patentanwälte
(86) Internationale Anmeldenummer: PCT/EP2021/055124
(87) Internationale Veröffentlichungsnummer: WO 2021/175819

(56) Entgegenhaltungen:
- EP-A1- 2 965 990
- WO-A1-2016/184597
- WO-A1-2017/083894
- WO-A2-2015/189721
- DE-A1- 19 944 619
- US-A- 5 335 882

## Beschreibung

### Stand der Technik

Ein Fluggastsitz mit einer Unterbringungsmöglichkeit für eine Schwimmweste ist bekannt. Bei bekannten Fluggastsitzen ist die Schwimmweste unter einer Sitzfläche des Fluggastsitzes oder unterhalb der Armlehne in einer Schwimmwestenaufnahme untergebracht.

Nachteilig an diesen bekannten Unterbringungsorten für die Schwimmweste ist, dass bei einer Unterbringung der Schwimmweste unterhalb der Armlehne beispielsweise Stauraum für andere Komponenten des Fluggastsitz, z.B. Multimedia-Komponenten, beschränkt ist oder die Schwimmweste vergleichsweise schwer zugänglich ist. Beispielsweise ist eine Zugänglichkeit der Schwimmweste bei einer Unterbringung der Schwimmweste unter der Sitzfläche des Fluggastsitz bei einem Fluggastsitz mit Beinauflage nicht gegeben.

Aus der DE 199 44 619 A1 und aus der WO 2016/184597 A1 sind ein Fluggastsitz mit einer an dem Fluggastsitz angeordneten Unterbringungsmöglichkeit für eine Schwimmweste bekannt. Aus der WO 2015/189721 A2 ist ein Fluggastsitz mit einer Beinabstützung bekannt. Aus der WO 2017/083894 A1 ist eine Einzugsvorrichtung zum Einziehen eines bewegbaren Möbelteils bekannt.

### Aufgabe und Vorteile der Erfindung

Der Erfindung liegt die Aufgabe zugrunde eine verbesserte Unterbringungsmöglichkeit für eine Schwimmweste an einem Fluggastsitz bereitzustellen. Insbesondere eine Vorrichtung zur Montage am Fluggastsitz bereitzustellen, mittels welcher ein Zugang zu einer Schwimmweste erleichtert ist und vorteilhafterweise Stauraum für weitere Komponenten des Fluggastsitz freigegeben ist.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einer Beinauflage für einen Fluggastsitz aus, wobei die Beinauflage eine Vorrichtung aufweist. Beispielsweise ist die Beinauflage als eine Fluggastsitz-Beinauflage vorhanden.

Vorteilhafterweise umfasst der Fluggastsitz eine bewegliche Beinauflage, welche aus einer Grundposition in eine Ruheposition schwenkbar ist und umgekehrt. Bevorzugterweise ist die Beinauflage in der Ruheposition derart ausgeschwenkt am Fluggastsitz vorhanden, dass ein Fluggast, welcher den Fluggastsitz nutzt, seine Beine an der Beinauflage auflegen kann.

Beispielsweise umfasst der Fluggastsitz ein Grundgestell, an welchem ein Sitzboden und eine Rückenlehne des Fluggassitz angeordnet sind. Vorteilhafterweise sind der Sitzboden und die Rückenlehne beweglich zum Grundgestell oder zu Teilen des Grundgestells vorhanden.

Der Kern der Erfindung ist darin zu sehen, dass die Vorrichtung ein Gehäuse umfasst, wobei das Gehäuse eine erste und eine zweite Gehäusehälfte aufweist, wobei die beiden Gehäusehälften schwenkbeweglich miteinander verbunden sind, wobei das Gehäuse derart ausgebildet ist, dass eine Schwimmweste für einen Fluggast darin verstaubar ist, wobei die Vorrichtung an einer Grundstruktur der Beinauflage angeordnet ist, wobei die Vorrichtung eine Federvorrichtung aufweist, wobei die erste Gehäusehälfte durch eine Federkraft der Federvorrichtung gegenüber der zweiten Gehäusehälfte kraftbeaufschlagt vorhanden ist, sodass die erste Gehäusehälfte aus einer geöffneten Position relativ zur zweiten Gehäusehälfte in Richtung einer geschlossenen Position relativ zur zweiten Gehäusehälfte bewegbar ist.

Beispielsweise ist die erste Gehäusehälfte durch die Federkraft der Federvorrichtung aus einer geöffneten Position in Richtung der geschlossenen Position relativ zur zweiten Gehäusehälfte bewegbar. Denkbar ist auch, dass die erste Gehäusehälfte entgegen der Federkraft der Federvorrichtung aus der geöffneten Position in Richtung der geschlossenen Position relativ zur zweiten Gehäusehälfte bewegbar vorhanden ist. Beispielsweise ist eine Bewegung der ersten Gehäusehälfte relativ zur zweiten Gehäusehälfte aus einer geöffneten Position in Richtung der geschlossenen Position eine Schließbewegung in Schließrichtung. Zum Beispiel ist eine Bewegung der ersten Gehäusehälfte relativ zur zweiten Gehäusehälfte aus der geschlossenen Position in Richtung einer geöffneten Position eine Öffnungsbewegung in Öffnungsrichtung.

Beispielsweise umfasst der Fluggastsitz eine am Grundgestell oder eine an einem Teil des Grundgestells beweglich angeordnete Beinauflage. Vorteilhafterweise ist die Grundstruktur der Beinauflage als ein Rahmen oder als eine Stützstruktur der Beinauflage ausgebildet. Zum Beispiel ist an der Grundstruktur der Beinauflage ein Polster bzw. eine Polsterung der Beinauflage anordenbar. Vorteilhafterweise stützt die Grundstruktur das Polster gegen eine Kraft oder eine Belastung eines Fluggastsitz-Nutzers ab. Bevorzugterweise ist die Beinauflage, insbesondere ausschließlich über die Grundstruktur, mit dem verbleibenden Fluggastsitz, insbesondere mit dem Grundgestell, beweglich verbunden.

Vorteilhafterweise ist die Schwimmweste als eine Flugzeug-Schwimmweste ausgebildet, insbesondere als eine Fluggastsitz-Schwimmweste. Beispielsweise umfasst die zweite Gehäusehälfte eine Haltevorrichtung, um die Schwimmweste im angeordneten Zustand an der zweiten Gehäusehälfte festzulegen. Zum Beispiel ist die Schwimmweste an der zweiten Gehäusehälfte durch die Haltevorrichtung an die zweiten Gehäusehälfte einhängbar oder einschiebbar.

Bevorzugterweise ist eine Nutzfläche des Fluggastsitzes die Fläche des Fluggastsitzes, welche ein Nutzeroder Fluggast des Fluggastsitzes bei üblichem Gebrauch berührt, z.B. auf welcher er sitzt oder an welche er sich bzw. ein Körperteil anlehnt, z.B. an welche er seine Beine anlegt oder auflegt.

Vorteilhaferweise sind die Gehäusehälften fest, stabil und/oder starr ausgebildet. Beispielsweise sind die Gehäusehälften aus Metall und/oder einem stabilen Kunststoff ausgebildet. Zum Beispiel sind die Gehäusehälften ausschließlich aus Metall und/oder einem stabilen Kunststoff ausgebildet.

Beispielsweise ist ein Polster und/oder ein Sitzbezug, z.B. ein Teil einer Polsterung, an der ersten Gehäusehälfte anordenbar. Beispielsweise ist der Sitzbezug und/oder das Polster mittels eines Haken- und Ösenbands, eines sogenannten Klettbands anklettbar vorhanden. Denkbar ist auch, dass der Sitzbezug und/oder das Polster an der ersten Gehäusehälfte anklebbar oder anklemmbar vorhanden ist. Vorteilhafterweise ist der Sitzbezug und/oder das Polster lösbar an der ersten Gehäusehälfte anordenbar. Vorstellbar ist auch, dass die erste Gehäusehälfte, insbesondere die Vorrichtung, unmittelbar einen Sitzbezug und/oder ein Polster aufweist oder bildet.

Vorteilhafterweise ist die Vorrichtung an Stelle eines Polsters der Beinauflage an die Beinauflage angeordnet. Beispielsweise ist die Vorrichtung neben einem Polster und/oder zwischen Polstern der Beinauflage an der Beinauflage angeordnet. Vorteilhafterweise umfasst die Beinauflage zusätzlich zur Vorrichtung und beispielsweise zusätzlich zur an der Vorrichtung angeordneten Polsterelementen des Polsters weitere Polsterelemente. Vorteilhafterweise bilden die weiteren Polsterelemente zusammen mit den an der Vorrichtung vorhandenen Polsterelementen ein Polster oder eine Polsterung der Beinauflage.

Vorteilhafterweise existiert eine einzige geschlossene Position der beiden Gehäusehälften relativ zueinander. Beispielsweise sind die beiden Gehäusehälften in der geschlossenen Position um eine Schwenkachse, in eine Schließrichtung, maximal aufeinander zugeschwenkt oder zugedreht vorhanden. Denkbar ist auch, dass eine erste geschlossene Position existiert, in welcher die beiden Gehäusehälften aufeinander zubewegt vorhanden und mittels einer Verschlussmechanik in der ersten geschlossenen Position relativ zueinander festlegbar sind. Vorstellbar ist weiterhin, dass eine zweite geschlossene Position existiert, wobei die erste Gehäusehälfte aus der ersten geschlossenen Position in Schließrichtung in die zweite geschlossene Position schwenkbar ist. Hierdurch ist beispielsweise ein Touch-Latch-Mechanismus zum Öffnen des Gehäuses realisierbar.

Bevorzugterweise existieren eine Vielzahl von geöffneten Positionen der beiden Gehäusehälften zueinander. Insbesondere existiert eine einzige geöffnete Position, die maximal geöffnete Position, in welcher diebeiden Gehäusehälften maximal voneinander weggeschwenkt vorhanden sind. Beispielsweise umfasst die Vorrichtung ein Anschlagsorgan, an welchem eine der beiden Gehäusehälften, insbesondere die erste Gehäusehälfte in der maximal geöffneten Position ansteht.

Außerdem wird vorgeschlagen, dass die beiden Gehäusehälften unlösbar miteinander verbunden sind. Hierdurch ist im Notfall, wenn ein Nutzer auf die Schwimmweste zugreifen muss, eine Öffnung der Vorrichtung zuverlässig und sicher realisierbar. Ebenfalls ist hierdurch eine vergleichsweise sichere Unterbringung der Schwimmweste in der Vorrichtung realisierbar, bei welcher die Schwimmweste, z.B. gegenüber unerlaubtem Zugriff, vergleichsweise sicher geschützt ist.

Von Vorteil erweist sich auch, dass die Federvorrichtung zwei Federelemente aufweist. Hierdurch ist eine Redundanz der Federvorrichtung realisierbar. Außerdem ist dadurch ein Verkanten der Gehäusehälften bei einer Bewegung der Gehäusehälften relativ zueinander vermieden.

Vorteilhafterweise umfasst die Federvorrichtung genau zwei Federelemente. Beispielsweise ist ein Federelement als eine Feder, z.B. als Schenkelfeder oder als eine Schraubenfeder, ausgebildet. Vorteilhafterweise sind die Federelemente der Federvorrichtung voneinander beabstandet an der Vorrichtung vorhanden.

Von Vorteil erweist sich außerdem, dass jede Gehäusehälfte ein Hauptseitenelement aufweist, wobei an jedem der Hauptseitenelemente quer dazu abstehende Seitenelemente vorhanden sind, wobei zwei Seitenelemente eines Hauptseitenelements voneinander beabstandet und gegenüberliegend ausgebildet sind, wobei ein Abstand von den zwei beabstandeten und gegenüberliegenden Seitenelementen der ersten Gehäusehälfte größer ist, als ein Abstand von den zwei beabstandeten und gegenüberliegenden Seitenelementen der zweiten Gehäusehälfte, sodass in der geschlossenen Position der ersten Gehäusehälfte, die Seitenelemente der ersten und der zweiten Gehäusehälfte überlappend vorhanden sind. Hierdurch ist in der geschlossenen Position des Gehäuses die Schwimmweste vorteilhafterweise unzugänglich im Inneren des Gehäuses anordenbar. Beispielsweise ist das Gehäuse hierdurch vergleichsweise stabil ausgebildet, sodass in der geschlossenen Position des Gehäuses kein Gegenstand in das Gehäuse einbringbar ist. Bevorzugterweise umschließen die beiden Gehäusehälften in der geschlossenen Position das Innere des Gehäuses. Vorteilhafterweise bilden die beiden Gehäusehälften in der geschlossenen Position im Inneren einen Hohlraum. Vorteilhafterweise ist im Hohlraum des Gehäuses die Schwimmweste unterbringbar. Beispielsweise umschließen die Hauptseitenelemente und die Seitenelemente der Gehäusehälften in der geschlossenen Position das Innere, insbesondere den Hohlraum. Vorteilhafterweise umschließen die Hauptseitenelemente und die Seitenelemente der Gehäusehälften in der geschlossenen Position das Innere, insbesondere den Hohlraum, vollständig.

Vorteilhafterweise sind an jeder Gehäusehälfte vier Seitenelemente vorhanden. Beispielsweise sind die Seitenelemente rechteckförmig angeordnet. Vorteilhafterweise sind jeweils zwei Seitenelemente einer Gehäusehälfte beispielsweise unmittelbar miteinander verbunden. Vorteilhafterweise ist jede Gehäusehälfte in Form einer Halbschale oder halbschalenförmig vorhanden.

Bevorzugterweise ist das Hauptseitenelement der zweiten Gehäusehälfte insbesondere unmittelbar anliegend an der Grundstruktur der Beinauflage vorhanden. Vorstellbar ist auch, dass die Grundstruktur der Beinauflage das Hauptseitenelement der zweiten Gehäusehälfte bildet. Beispielsweise ist die zweite Gehäusehälfte, insbesondere das Hauptseitenelement der zweiten Gehäusehälfte, mit der Grundstruktur vernietet, verschweißt, verlötet oder verklebt.

Bevorzugterweise sind die erste Gehäusehälfte und die zweite Gehäusehälfte mittels eines Schwenklagers miteinander verbunden. Beispielsweise ist ein Seitenelement der ersten Gehäusehälfte mit einem Seitenelement der zweiten Gehäusehälfte mittels des Schwenklagers verbunden. Denkbar ist, dass das Schwenklager eine einzige Schwenklagerachse aufweist, welche sich von einem Seitenelement der ersten Gehäusehälfte zu einem dem Seitenelement gegenüberliegendes und beabstandetes, weiteres Seitenelement der ersten Gehäusehälfte erstreckt.

Vorteilhafterweise sind zwei Schwenklager vorhanden, wobei jedes Schwenklager eine Schwenklagerachse umfasst, wobei die beiden Schwenklagerachsen eine gemeinsame Schwenkachse bilden. Beispielsweise sind die zwei Schwenklager voneinander beabstandet vorhanden. Bevorzugterweise verbindet ein erstes Schwenklager der beiden Schwenklager ein erstes Seitenelement der ersten Gehäusehälfte mit einem ersten Seitenelement der zweiten Gehäusehälfte und ein zweites Schwenklager der beiden Schwenklager ein zweites Seitenelement der ersten Gehäusehälfte mit einem zweiten Seitenelement der zweiten Gehäusehälfte. Beispielsweise sind die ersten und zweiten Seitenelemente der ersten und zweiten Gehäusehälften jeweils gegenüberliegend und beabstandet zueinander vorhanden.

Vorteilhafterweise ist die Federvorrichtung im Bereich des Schwenklagers vorhanden. Denkbar ist, dass die Federvorrichtung am Schwenklager ausgebildet ist. Beispielsweise umschließt ein Federelement die Schwenklagerachse des Schwenklagers. Vorstellbar ist weiterhin, dass das Federelement sich mit einem ersten Ende an der ersten Gehäusehälfte und mit einem zweiten Ende z.B. an der zweiten Gehäusehälfte abstützt, sodass die beiden Gehäusehälften in zumindest einer Relativposition zueinander durch eine Federkraft des Federelements kraftbeaufschlagt vorhanden sind. Denkbar ist auch, dass zusätzlich oder statt der Abstützung an der zweiten Gehäusehälfte das Federelement sich mit seinem zweiten Ende an der Grundstruktur abstützt. Beispielsweise stützt sich das Federelement mit dem ersten Ende am Hauptseitenelement und/oder an einem Seitenelement der ersten Gehäusehälfte und mit dem zweiten Ende am Hauptseitenelement der zweiten Gehäusehälfte und/oder an einem Seitenelement der zweiten Gehäusehälfte und/oder an der Grundstruktur der Beinauflage ab.

Vorteilhafterweise ist das Federelement mit seinem ersten Ende mit dem Hauptseitenelement und/oder mit einem Seitenelement der ersten Gehäusehälfte positionsfest verbunden. Zum Beispiel ist das Federelement mit seinem zweiten Ende mit dem Hauptseitenelement der zweiten Gehäusehälfte und/oder mit dem Seitenelement der zweiten Gehäusehälfte und/oder mit der Grundstruktur der Beinauflage positionsfest verbunden. Beispielsweise ist ein Ende des Federelements an einem der vorangegangenen Elemente der Vorrichtung eingehängt und/oder angeklemmt und/oder angeschweißt und/oder angeklebt vorhanden.

Weiter erweist es sich von Vorteil, dass die Vorrichtung eine Verschlussmechanik aufweist, wobei die Verschlussmechanik die beiden Gehäusehälften in der geschlossenen Position zueinander festlegt, wobei die Verschlussmechanik ein Zugelement umfasst, wobei die Verschlussmechanik derart ausgebildet ist, dass durch Ziehen am Zugelement Teile der Verschlussmechanik derart bewegt werden, dass die Gehäusehälften im Bereich der Verschlussmechanik voneinander gelöst sind. Durch Ziehen am Zugelement ist ein Bewegen der ersten Gehäusehälfte relativ zur zweiten Gehäusehälfte vom geschlossenen Zustand in einen geöffneten Zustand freigegeben.

Beispielsweise ist das Zugelement flexibel vorhanden. Denkbar ist, dass das Zugelement als eine Leine oder als ein Band vorhanden ist. Z.B. ist das Zugelement als ein Stoffband oder als ein Kunststoffband ausgebildet. Beispielsweise ist das Zugelement durch eine Durchgangsöffnung des Hauptseitenelements der ersten Gehäusehälfte durchgeführt vorhanden.

Außerdem erweist es sich von Vorteil, dass das Hauptseitenelement der zweiten Gehäusehälfte ein integraler Bestandteil der Grundstruktur der Beinauflage ist. Hierdurch ist eine Herstellung und/oder Montage der Beinauflage vereinfacht. Vorteilhafterweise ist die Vorrichtung unmittelbar an der Grundstruktur der Beinauflage angeordnet. Beispielsweise ist die Vorrichtung oder sind Teile der Vorrichtung integraler Bestandteil der Grundstruktur der Beinauflage.

Vorteilhafterweise sind die Seitenelemente der zweiten Gehäusehälfte im angeordneten Zustand der Vorrichtung insbesondere unmittelbar an die Grundstruktur der Beinauflage angeordnet. Beispielsweise sind die Seitenelemente der zweiten Gehäusehälfte unlösbar mit der Grundstruktur verbunden, z.B. integral mit der Grundstruktur vorhanden. Denkbar ist auch, dass die Seitenelemente der zweiten Gehäusehälfte an die Grundstruktur angeklebt, angeschraubt und/oder angenietet vorhanden sind. Beispielsweise ist die zweite Gehäusehälfte insbesondere unlösbar mit der Grundstruktur der Beinauflage verbunden.

Eine vorteilhafte Modifikation der Beinauflage ist, dass in der geschlossenen Position der ersten Gehäusehälfte die Federkraft der Federvorrichtung die erste Gehäusehälfte in Richtung einer geöffneten Position der ersten Gehäusehälfte relativ zur zweiten Gehäusehälfte drängt. Hierdurch ist eine automatische Öffnungsbewegung des Gehäuses realisiert.

Beispielsweise drängt die Federvorrichtung mit ihrer Federkraft die erste Gehäusehälfte aus der geschlossenen Position relativ zur zweiten Gehäusehälfte um einen Schwenkbereich zwischen 5° und 25° in eine, insbesondere erste, geöffnete Position relativ zur zweiten Gehäusehälfte, z.B. bei gelöster Verschlussmechanik.

Eine weitere denkbare Ausführungsform der Beinauflage ist, dass in der geschlossenen Position der ersten Gehäusehälfte relativ zur zweiten Gehäusehälfte die Federkraft der Federvorrichtung die erste Gehäusehälfte in Richtung der geschlossenen Position der ersten Gehäusehälfte relativ zur zweiten Gehäusehälfte drängt, sodass die Federkraft der Federvorrichtung einer Bewegungskraft, um die erste Gehäusehälfte von der geschlossenen Position in eine geöffnete Position relativ zur zweiten Gehäusehälfte zu bewegen, entgegenwirkt. Hierdurch ist die Vorrichtung derart ausgebildet, dass die beiden Gehäusehälften vorteilhafterweise in der geschlossenen Position gehalten sind oder insbesondere automatisch, mittels der Federkraft, in die geschlossene Position bewegt werden. Vorteilhafterweise ist hierdurch ein Bewegungsbereich im Bereich der Beinauflage freigehalten, insbesondere im Evakuierungsfall. Beispielsweise ist durch eine derartige Ausbildung der Beinauflage eine Stolperfalle, aufgrund der ersten Gehäusehälfte in der geöffneten Position relativ zur zweiten Gehäusehälfte, vergleichsweise vermindert.

Vorteilhafterweise ist die Vorrichtung derart ausgebildet, dass bei gelöster Verschlussmechanik die erste Gehäusehälfte aus der geschlossenen Position durch eine Kraft eines Benutzer in eine geöffnete Position relativ zur zweiten Gehäusehälfte bewegbar ist. Beispielsweise ist die erste Gehäusehälfte aus der geschlossenen Position durch eine Kraft eines Benutzer entgegen der Federkraft der Federvorrichtung in eine geöffnete Position relativ zur zweiten Gehäusehälfte bewegbar.

Ebenfalls erweist es sich von Vorteil, dass in einer geöffneten Position der ersten Gehäusehälfte die Federkraft der Federvorrichtung die erste Gehäusehälfte in Richtung der geschlossenen Position der ersten Gehäusehälfte relativ zur zweiten Gehäusehälfte drängt. Bevorzugterweise drängt in jeder geöffneten Position der ersten Gehäusehälfte die Federkraft der Federvorrichtung die erste Gehäusehälfte in Richtung der geschlossenen Position. Vorteilhafterweise ist die Federvorrichtung derart vorhanden, dass die Federvorrichtung aufgrund ihrer Federkraft die erste Gehäusehälfte aus einer geöffneten Position, insbesondere aus jeder geöffneten Position, in die geschlossene Position bewegt.

Weiter wird vorgeschlagen, dass die Federkraft der Federvorrichtung die erste Gehäusehälfte aus einer zweiten geöffneten Position relativ zur zweiten Gehäusehälfte in Richtung der geschlossenen Position der ersten Gehäusehälfte in eine erste geöffnete Position drängt. Hierdurch ist bei gelöster Verschlussmechanik ein Zugriff eines Nutzers auf einen Gegenstand im Inneren des Gehäuses realisiert, bei gleichzeitiger Verminderung einer Stolperfalle.

Vorteilhafterweise ist ein Öffnungsbereich definierbar, welcher ausgehend von der geschlossenen Position einen Schwenkzustand der ersten Gehäusehälfte relativ zur zweiten Gehäusehälfte in Öffnungsrichtung definiert. In der geschlossenen Position ist der Öffnungsbereich vorteilhafterweise 0° und nimmt in Öffnungsrichtung einen positiven Wert an. Beispielsweise ist die erste Gehäusehälfte relativ zur zweiten Gehäusehälfte ausgehend von der geschlossenen Position in Öffnungsrichtung um einen Öffnungsbereich oder um einen Winkelbereich von bis zu 45° oder 50° schwenkbar, z.B. bis zu der maximal geöffneten Position. Vorstellbar ist, dass die erste oder die zweite geöffnete Position als ein Bereich ausgebildet ist, in welchen die erste Gehäusehälfte relativ zur zweiten Gehäusehälfte schwenkbar ist.

Bevorzugterweise ist die erste Gehäusehälfte in der ersten geöffnete Position in einem Öffnungsbereich von 15° bis 30° aus der geschlossenen Position relativ zur zweiten Gehäusehälfte weggeschwenkt vorhanden. Denkbar ist, dass die erste Gehäusehälfte in der ersten geöffneten Position in einem Öffnungsbereich von 15° bis 25°, in einem Öffnungsbereich von 15° bis 20° oder in einem Öffnungsbereich von 20° bis 25° aus der geschlossenen Position relativ zur zweiten Gehäusehälfte weggeschwenkt vorhanden ist. Beispielsweise ist die erste Gehäusehälfte in der ersten geöffneten Position um einen Winkelbereich von 15°, 20°, 25° oder 30° relativ zur zweiten Gehäusehälfte von der geschlossenen Position weggeschwenkt vorhanden.

Vorteilhafterweise ist die erste Gehäusehälfte in der zweiten geöffneten Position in einem Öffnungsbereich von 30° bis 50° aus der geschlossenen Position relativ zur zweiten Gehäusehälfte weggeschwenkt vorhanden. Denkbar ist, dass die erste Gehäusehälfte in der zweiten geöffneten Position in einem Öffnungsbereich von 30° bis 45°, in einem Öffnungsbereich von 30° bis 40°, in einem Öffnungsbereich von 35° bis 45° oder in einem Öffnungsbereich von 35° bis 40° aus der geschlossenen Position relativ zur zweiten Gehäusehälfte weggeschwenkt vorhanden ist. Beispielsweise ist die erste Gehäusehälfte in der zweiten geöffneten Position um einen Winkelbereich von 30°, 35°, 40°, 45° oder 50° relativ zur zweiten Gehäusehälfte von der geschlossenen Position weggeschwenkt vorhanden.

Vorteilhafterweise umfasst die Vorrichtung, insbesondere die zweite Gehäusehälfte und/oder die Grundstruktur ein Anschlagsorgan, an welchem die erste Gehäusehälfte mit einem Anschlagselement der ersten Gehäusehälfte in einer geöffneten Position ansteht. Vorteilhafterweise weist die erste Gehäusehälfte im angeschlagenen oder anstehenden Zustand die maximal geöffneten Position relativ zur zweiten Gehäusehälfte auf. Beispielsweise definiert das Anschlagsorgan und/oder das Anschlagselement die maximal geöffnete Position.

Von Vorteil erweist sich auch, dass die Federvorrichtung derart ausgebildet ist, dass die erste Gehäusehälfte aus einer geöffneten Position, insbesondere aus der maximal geöffneten Position, mittels der Federkraft in Richtung der geschlossenen Position bewegbar ist, wobei die Federvorrichtung derart vorhanden ist, dass die erste Gehäusehälfte aufgrund der Federkraft der Federvorrichtung die geschlossene Position nicht erreicht und/oder die erste Gehäusehälfte mittels der Federkraft der Federvorrichtung aus einer geöffneten Position nicht in die geschlossene Position bewegbar ist.

In einer vorteilhaften Ausführungsform der Beinauflage ist die Federvorrichtung derart ausgebildet und an der Vorrichtung angeordnet, dass die Federvorrichtung die erste Gehäusehälfte aus der geschlossenen Position relativ zur zweiten Gehäusehälfte aufgrund der Federkraft der Federvorrichtung in Öffnungsrichtung in eine geöffnete Position, z.B. in die erste geöffnete Position, bewegt und wobei die Federvorrichtung die erste Gehäusehälfte aus der zweiten geöffneten Position relativ zur zweiten Gehäusehälfte aufgrund der Federkraft der Federvorrichtung in Schließrichtung in eine weitere geöffnete Position, z.B. in die erste geöffnete Position, bewegt. Denkbar ist, dass die erste Gehäusehälfte sowohl in der geschlossenen Position als auch in der zweiten geöffneten Position durch die Federkraft der Federvorrichtung kraftbeaufschlagt vorhanden ist. Vorstellbar ist weiterhin, dass in der ersten geöffneten Position keine Federkraft der Federvorrichtung auf die erste Gehäusehälfte wirkt.

Vorstellbar ist aber auch, dass die Federvorrichtung derart ausgebildet ist, dass die erste Gehäusehälfte aus einer geöffneten Position, z.B. aus der maximal geöffneten Position, mittels der Federkraft in Schließrichtung vollständig in die geschlossene Position bewegbar ist.

Bevorzugterweise umfasst die erste Gehäusehälfte eine Durchgangsöffnung, sodass ein Sichtelement von einem Inneren des Gehäuses durch die Durchgangsöffnung nach außen bringbar ist. Hierdurch ist das Sichtelement für einen Betrachter von außen, ohne Öffnen des Gehäuse sichtbar vorhanden. Vorteilhafterweise umfasst die Vorrichtung ein Fixierungsorgan, um das Sichtelement im durchgeführten Zustand an der Durchgangsöffnung am Gehäuse festzulegen. Die Durchgangsöffnung ist beispielsweise als ein Schlitz ausgebildet. Vorstellbar ist auch, dass durch die Durchgangsöffnung ein Auslöseband einer Verschlussmechanik des Gehäuses nach außen bringbar ist.

Vorteilhafterweise umfasst das Sichtelement eine Information. Beispielsweise ist die Information als eine Farbmarkierung, z.B. als eine Farbe ausgebildet, welche das Sichtelement aufweist. Denkbar ist jedoch auch, dass das Sichtelement eine Information in Form eines Aufdrucks und/oder eines Aufklebers aufweist. Die Information umfasst beispielsweise ein Datum, z.B. ein Datum auf dem Aufdruck und/oder auf dem Aufkleber. Vorstellbar ist weiter, dass die Information in Form eines Strichcodes und/oder eines Barcodes vorhanden ist.

Bevorzugterweise ist das Sichtelement Bestandteil eines im Inneren der Vorrichtung oder im Inneren des Gehäuses unterbringbaren Gegenstands, z.B. der Schwimmweste. Vorteilhafterweise ist das Sichtelement unlösbar mit dem Gegenstand, z.B. der Schwimmweste, und/oder einer Verpackung des Gegenstands verbunden. Beispielsweise ist das Sichtelement als ein Etikett ausgebildet.

Beispielsweise weist die Vorrichtung eine Informationseinrichtung auf, wobei an die Informationseinrichtung eine Information über das im Inneren des Gehäuses der Vorrichtung Befindliche anbringbar ist. Die Information ist beispielsweise ein Mindesthaltbarkeitsdatum. Die Information ist beispielsweise als eine Farbmarkierung an der Informationseinrichtung vorhanden. Beispielsweise ist die Informationseinrichtung als ein Sichtfenster ausgebildet. Vorstellbar ist, dass das Sichtelement die Information umfasst.

Von Vorteil ist auch, dass die Vorrichtung eine Siegeleinrichtung aufweist, sodass an die Vorrichtung ein Siegel anbringbar ist. Vorteilhafterweise ist in der geschlossenen Position des Gehäuses das Siegel an die Vorrichtung anbringbar. Beispielsweise ist das Gehäuse in einer Weise ausgebildet, dass im angeordneten Zustand des Siegels, durch Bewegen der beiden Gehäusehälften relativ zueinander aus der geschlossenen Position in eine geöffneten Position das Siegel zerstört wird oder das Siegel ein Öffnen des Gehäuses verhindert. Vorteilhafterweise umfasst die Siegeleinrichtung zwei Sicherungselemente, welche durch das Siegel in der geschlossenen Position des Gehäuses miteinander verbindbar sind. Ein Sicherungselement umfasst beispielsweise eine Öse. Beispielsweise sind die Sicherungselemente fahnenartig abstehend am Gehäuse oder an der Beinauflage anordenbar. Beispielsweise ist ein erstes der Sicherungselemente insbesondere unmittelbar an die erste Gehäusehälfte insbesondere unlösbar angeordnet, z.B. angeklebt, angeschraubt und/oder angenietet. Von Vorteil erweist sich auch, dass ein zweites Sicherungselement der Siegeleinrichtung an die Grundstruktur der Beinauflage z.B. unlösbar angeordnet ist. Beispielsweise ist das zweite Sicherungselement an die Grundststruktur angeklebt, angeschraubt und/oder angenietet. Zum Beispiel ist das zweite Sicherungselment unmittelbar an die Grundstruktur angeordnet.

Eine vorteilhafte Ausführungsform der Erfindung ist ein Fluggastsitz mit einer Beinauflage nach einem der vorangegangen genannten Varianten. Vorteilhafterweise ist die Beinauflage schwenkbeweglich am Fluggastsitz vorhanden.

Eine weitere vorteilhafte Modifikation der Erfindung ist eine Sitzreihe mit mindestens zwei Fluggastsitzen wie vorangegangen genannt.

Eine weitere vorteilhafte Ausführungsform der Erfindung ist ein Flugzeug mit einem Fluggastsitz oder mit einer Sitzreihe oder mit einer Beinauflage nach einem der vorangegangen genannten Varianten.

### Figurenbeschreibung

Ein Ausführungsbeispiel wird anhand der nachstehenden schematischen Zeichnungen unter Angabe von weiteren Einzelheiten und Vorteilen näher erläutert.

Es zeigen:
- Figur 1: in einer perspektivischen Ansicht von schräg vorne oben eine Sitzreihe mit zwei Fluggastsitzen jeweils umfassend einen Sitzboden, eine Rückenlehne samt rückseitiger Umhausung und eine Beinauflage,
- Figuren 2 bis 5: in unterschiedlichen perspektivischen Ansichten von schräg vorne oben eine weitere Sitzreihe mit zwei Fluggastsitzen mit einer erfindungsgemäßen Beinauflage in verschiedenen Beinauflagepositionen,
- Figuren 6 bis 9: in unterschiedlichen perspektivischen Ansichten von schräg vorne eine Beinauflage, wobei eine erste Gehäusehälfte einer Vorrichtung der Beinauflage sich in verschiedenen Zuständen relativ zu einer zweiten Gehäusehälfte befindet,
- Figur 10: eine perspektivische Ansicht von schräg vorne auf die Beinauflage gemäß Figur 6, wobei seitliche Polster der Beinauflage unsichtbar gehalten sind,
- Figur 11: eine perspektivische Ansicht von schräg vorne auf die Beinauflage gemäß Figur 10, wobei zusätzlich die erste Gehäusehälfte mit Polster unsichtbar gehalten ist und
- Figur 12: eine perspektivische Ansicht von schräg seitlich unten auf die Vorrichtung der Beinauflage gemäß Figur 10, wobei die Grundstruktur der Beinauflage und seitliche Polsterungen der Vorrichtung unsichtbar gehalten sind.

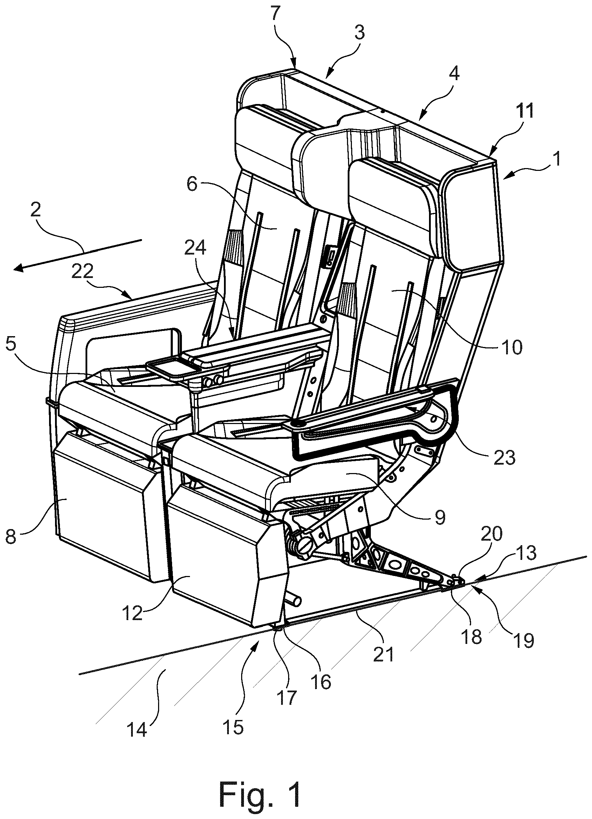

Figur 1 zeigt eine Sitzreihe 1 mit einer Sitzrichtung 2 mit zwei Fluggastsitzen 3 und 4. Nachfolgend beziehen sich Positions- und Richtungsangaben wie vorne, hinten, oben und unten auf die Sitzrichtung 2 und den Nutzzustand der Sitzreihe 1.

Beide Fluggastsitze 3 und 4 sind entsprechend aufgebaut. Der Fluggastsitz 3 weist einen Sitzboden 5, eine Rückenlehne 6 und eine zur Rückenlehne 6 rückseitige Umhausung 7 auf. Im Anschluss an einen vorne liegenden Endbereich des Sitzbodens 5 ist eine vorzugsweise klappbare oder schwenkbare Beinauflage 8 vorhanden, die um eine horizontale Achse klappbar ist.

Dementsprechend umfasst der Fluggastsitz 4 einen Sitzboden 9, eine Rückenlehne 10, eine Umhausung 11 und eine Beinauflage 12.

Die Sitzboden 5, 9, die Rückenlehnen 6, 10 und die Beinauflagen 8, 12 umfassen eine vorzugsweise ergonomisch geformte Polsterung.

Beispielsweise sind die Fluggastsitze 3 und 4 über zwei Stützbeine 13 (nur einer sichtbar) an einem Kabinenboden 14 einer Flugkabine eines dazugehörigen Flugzeuges (nicht gezeigt) montierbar. Das Stützbein 13 weist hierfür an einem unteren Endbereich 15 einer vorderen Strebe 16 eine Montagestelle 17 und eine weitere Montagestelle 18 an einem unteren Endbereich 19 einer hinteren Strebe 20 auf. Zwischen den Endbereichen 15 und 19 ist ein Verstrebungselement 21 vorgesehen.

Bevorzugterweise weist die Sitzreihe 1 zudem eine äußere Armlehne 22 seitlich am Fluggastsitz 3 und eine äußere Armlehne 23 seitlich am Fluggastsitz 4 auf. Zwischen den beiden Fluggastsitzen 3 und 4 ist vorzugsweise auf Höhe der beiden äußeren Armlehnen 22 und 23 eine Konsole 24 vorhanden, welche von einem Fluggast ebenfalls als Armauflage genutzt werden kann.

Vorteilhafterweise ist in einer Schalenform der jeweiligen Umhausung 7 bzw. 11 die jeweils dazugehörige Rückenlehne 6 bzw. 10 angeordnet. Die Rückenlehne 6 bzw. 10 ist vorzugsweise zur Einstellung von unterschiedlichen Kippstellungen beweglich in der Umhausung 7 bzw. 11 geführt, beispielsweise zusammen mit dem dazugehörigen verschiebbar gelagerten Sitzboden 5 bzw. 9.

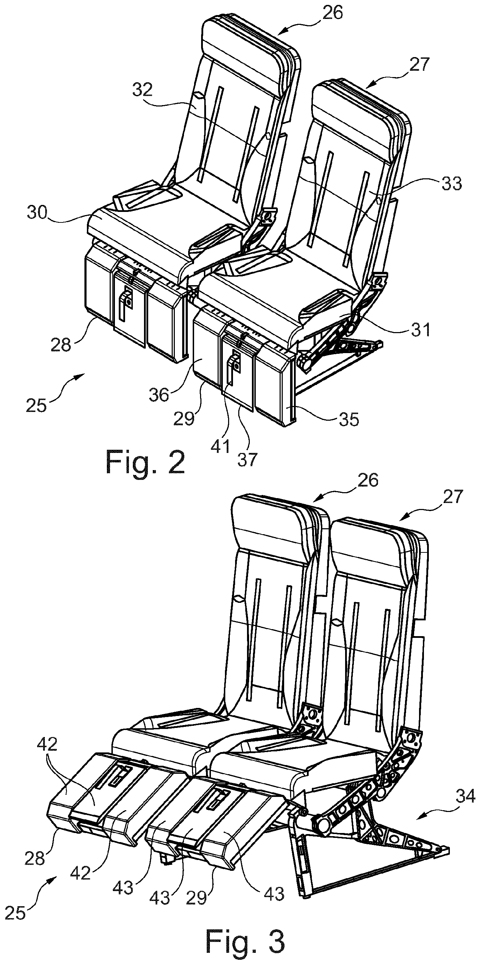

Bevorzugterweise umfassen die in der Figur 1 gezeigten Fluggastsitze 3, 4 die in den folgenden Figuren 2 bis 12 gezeigten und untenstehend beschriebenen Beinauflagen mit Vorrichtung.

In den Figuren 2 bis 4 ist eine weitere Sitzreihe 25 mit Fluggastsitzen 26, 27 gezeigt. Vorteilhafterweise entspricht die Sitzreihe 25 der Sitzreihe 1, wobei die Fluggastsitze 26, 27 der Sitzreihe 25 sich beispielsweise ausschließlich in einer unterschiedlichen Ausgestaltung der Beinauflagen 28, 29 der Fluggastsitze 26, 27 von den Fluggastsitzen 3, 4 der Sitzreihe 1 unterscheiden. Beispielsweise ist in den Figuren 2 bis 4 entsprechend bei der Sitzreihe 25 gegenüber der Sitzreihe 1 die Umhausung sowie die Armlehnen und die Konsole unsichtbar gehalten.

Vorteilhafterweise umfassen die Fluggastsitze 26, 27 der Sitzreihe 25 jeweils eine Beinauflagen 28, 29, einen Sitzboden 30, 31, eine Rückenlehne 32, 33, sowie Stützbeine 34 (nur eine Stützbein in den Figuren gezeigt).

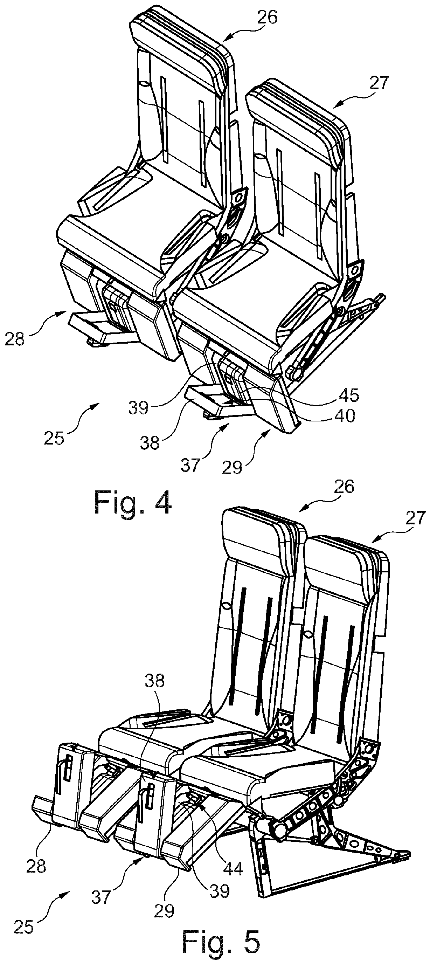

Vorteilhafterweise sind die Beinauflagen 28, 29 identisch aufgebaut, weshalb der Aufbau der Beinauflagen 28, 29 im Folgenden exemplarisch an der Beinauflage 29 beschrieben wird:
Die Beinauflage 29 umfasst vorteilhafterweise unter anderem ein erstes seitliches Polster 35 und ein zweites seitliches Polster 36, sowie eine Vorrichtung 37. Die Vorrichtung 37 umfasst eine erste Gehäusehälfte 38 und eine zweite Gehäusehälfte 39 (siehe auch Figur 5).

In den Figuren 2 bis 5 sind die Beinauflagen 28, 29 in unterschiedlichen Zuständen an den Fluggastsitzen 26, 27 gezeigt. In Figur 2 sind die Beinauflagen 28, 29 in einem eingeklappten Beinauflagezustand an den Fluggastsitzen 26, 27 gezeigt. Im eingeklappten Beinauflagezustand der Beinauflagen 28, 29 befinden sich die Fluggastsitze 26, 27 in einem aufrechten Nutzzustand. In Figur 3 sind die Beinauflagen 28, 29 in einem ausgeklappten Beinauflagezustand an den Fluggastsitzen 26, 27 gezeigt. Im ausgeklappten Beinauflagezustand der Beinauflagen 28, 29 befinden sich die Fluggastsitze 26, 27 in einem Liegezustand. Im Liegezustand kann ein Nutzer einer der Fluggastsitze 26, 27 seine Beine auf eine Nutzfläche 42, 43 der Beinauflagen 28, 29 auflegen oder anlegen.

In Figur 4 ist die Beinauflage 29 im eingeklappten Beinauflagezustand am Fluggastsitz 27 dargestellt und in Figur 5 ist die Beinauflage 29 im ausklappten Beinauflagezustand am Fluggastsitz 27 dargestellt, wobei jeweils die erste Gehäusehälfte 38 der Vorrichtung 37 in eine geöffnete Position relativ zur zweiten Gehäusehälfte 39 vorhanden ist. Gezeigt ist außerdem, dass in einem inneren Hohlraum 44 der Vorrichtung 37 eine Schwimmweste 45 angeordnet ist.

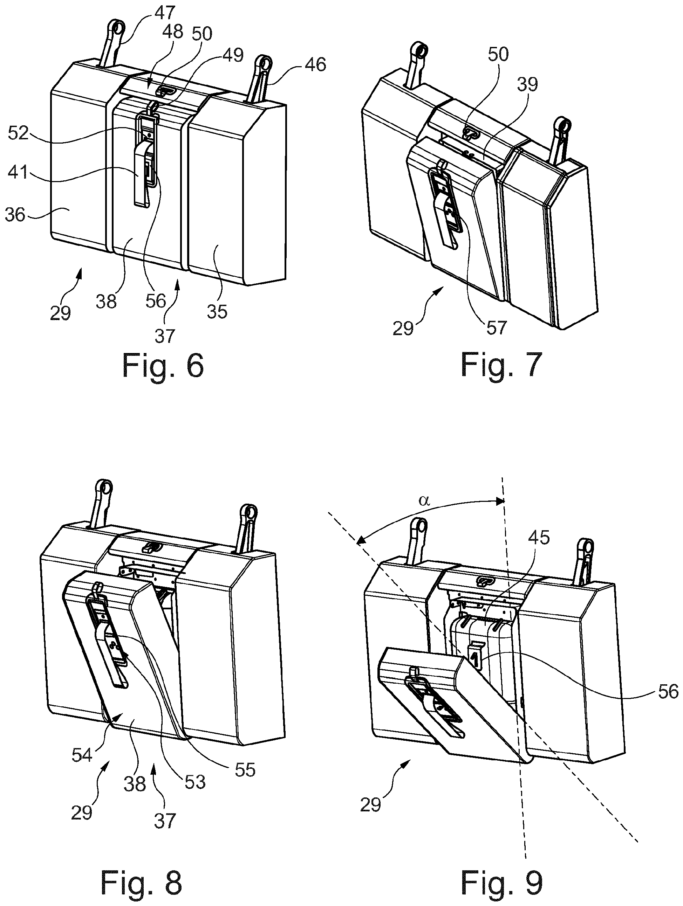

In den Figuren 6 bis 9 ist die Beinauflage 29 des Fluggastsitz 27 in unterschiedlichen perspektivischen Ansichten gezeigt.

In Figur 6 ist die Beinauflage 29 gezeigt, welche die Vorrichtung 37, mit der ersten Gehäusehälfte 38 und der zweiten Gehäusehälfte 39 umfasst. Weiter umfasst die Beinauflage 29 die Polster 35, 36 sowie zwei Anbindungsorgane 46, 47, mittels welchen die Beinauflage 29 schwenkbeweglich am verbleibenden Fluggastsitz 27 anordenbar ist. Vorteilhafterweise umfasst die Vorrichtung 37 an der ersten Gehäusehälfte 38 ein Zugelement einer Verschlussmechanik 40, beispielsweise in Form einer Lasche 41. Beispielsweise umfasst die erste Gehäusehälfte.38 eine Durchgangsöffnung in Form eines Schlitz 52. Vorteilhafterweise ist die Lasche 41 ausgehend von einer Rückseite der ersten Gehäusehälfte 38, welche den Hohlraum 44 begrenzt, durch den Schlitz 52 hindurchgeführt vorhanden. Hierdurch kann ein Nutzer durch ziehen an der Lasche 41 die Verschlussmechanik 40 auslösen, insbesondere öffnen.

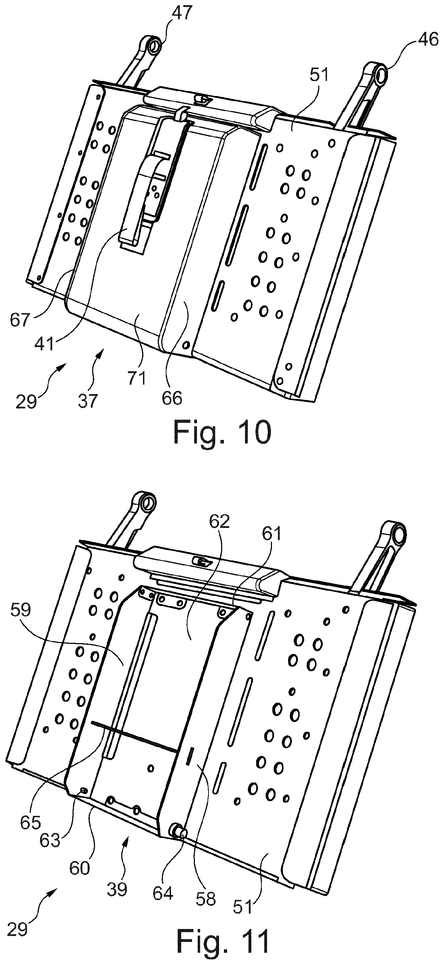

Bevorzugterweise ist an der Vorrichtung 37 außerdem eine Siegeleinrichtung 48 vorhanden. Vorteilhafterweise weist die Siegeleinrichtung 48 eine erste Öse 49 und eine zweite Öse 50 auf, welche in der geschlossenen Position der Gehäusehälften 38, 39, wie in Figur 6 gezeigt, mit einem Siegel (nicht dargestellt) verbindbar sind. Vorteilhafterweise ist die erste Öse 49 an der ersten Gehäusehälfte 38 befestigt. Beispielsweise ist die zweite Öse 50 an der Beinauflage 29 befestigt, insbesondere einer Grundstruktur 51 der Beinauflage 29 (siehe auch Figuren 10, 11).

Vorteilhafterweise umfasst die Vorrichtung 37 eine Informationseinrichtung in Form einer Aussparung 53. Beispielsweise ist die Aussparung 53 an einer Außenseite 54 der ersten Gehäusehälfte 38 ausgebildet. Zum Beispiel ist die Aussparung 53 zurückversetzt an der Außenseite 54 vorhanden, insbesondere in Richtung des Hohlraums 44 bzw. in Richtung der zweiten Gehäusehälfte 39. Vorteilhafterweise ist die Aussparung 53 zurückversetzt zur Nutzfläche 43 an der ersten Gehäusehälfte 38 ausgebildet. Vorteilhaft ist weiterhin, dass die Informationseinrichtung eine zweite Durchgangsöffnung in Form eines zweiten Schlitz 55 aufweist. Beispielsweise ist durch den zweiten Schlitz 55 ein Sichtelement 56 der Schwimmweste 45 hindurchführbar, sodass in der geschlossenen Position der ersten Gehäusehälfte 38 relativ zur zweiten Gehäusehälfte 39 das Sichtelement 56 in der Aussparung 53 vorhanden ist. Beispielsweise umfasst die Informationseinrichtung ein Fixierungsorgan 57, um das Sichtelement 56 in der Aussparung 53 festzulegen.

Bevorzugterweise ist die erste Gehäusehälfte 38 relativ zur zweiten Gehäusehälfte 39 um einen Winkelbereich α von der geschlossenen Position in eine geöffnete Position schwenkbar vorhanden (siehe auch Figur 9) und/oder umgekehrt. In der geschlossenen Position der ersten Gehäusehälfte 38 relativ zur zweiten Gehäusehälfte 39 ist der Winkel α vorteilhafterweise 0°.

In Figur 10 ist die Beinauflage 29 gezeigt, wobei die Polster 35 und 36 unsichtbar gehalten sind. Ebenfalls ist in Figur 10 die Schwimmweste 45 nicht gezeigt. In Figur 10 gezeigt ist, dass die Beinauflage 29 die Grundstruktur 51 aufweist, an welcher die Anbindungsorgane 46, 47 befestigt sind. Die Grundstruktur 51 ist vorteilhafterweise plattenförmig ausgebildet, zum Beispiel als eine Metallplatte.

Figur 11 entspricht der Beinauflage.29 gemäß Figur 10, wobei in Figur 11 die erste Gehäusehälfte 38 unsichtbar gehalten ist. Gezeigt ist in Figur 11 die Grundstruktur 51 der Beinauflage 29, wobei an der Grundstruktur 51 die zweite Gehäusehälfte 39 befestigt ist. Die zweite Gehäusehälfte 39 umfasst zwei lange Seitenelemente 58, 59, sowie zwei kurze Seitenelemente 60, 61. Vorteilhafterweise sind die Seitenelemente 58 bis 61 an der Grundstruktur 51 unmittelbar befestigt, z.B. angeschraubt oder angenietet. Beispielsweise bildet die Grundstruktur 51 dabei ein Hauptseitenelement 62 der zweiten Gehäusehälfte 39. Beispielsweise sind an der zweiten Gehäusehälfte 39 zwei Schwenklagerachsen 63, 64 vorhanden. Mittels den Schwenklagerachsen 63, 64 ist beispielsweise die erste Gehäusehälfte 38 schwenkbar mit der zweiten Gehäusehälfte 39 verbindbar. Vorteilhafterweise ist eine Schwenklagerachse 63 an einem langen Seitenelement 59 ausgebildet und die andere Schwenklagerachse 64 am anderen langen Seitenelement 58. Beispielsweise umfasst die zweite Gehäusehälfte 39 ein Halteorgan in Form eines Querbügels 65, welcher sich zwischen den beiden langen Seitenelementen 58, 59 erstreckt und an diesen angeordnet ist. Mittels des Querbügels 65 ist vorteilhafterweise eine an die zweite Gehäusehälfte 39 angeordnete Schwimmweste an der zweiten Gehäusehälfte 39 gehalten und damit ein unbeabsichtigtes Herausfallen der Schwimmweste aus der Vorrichtung 37 verhindert.

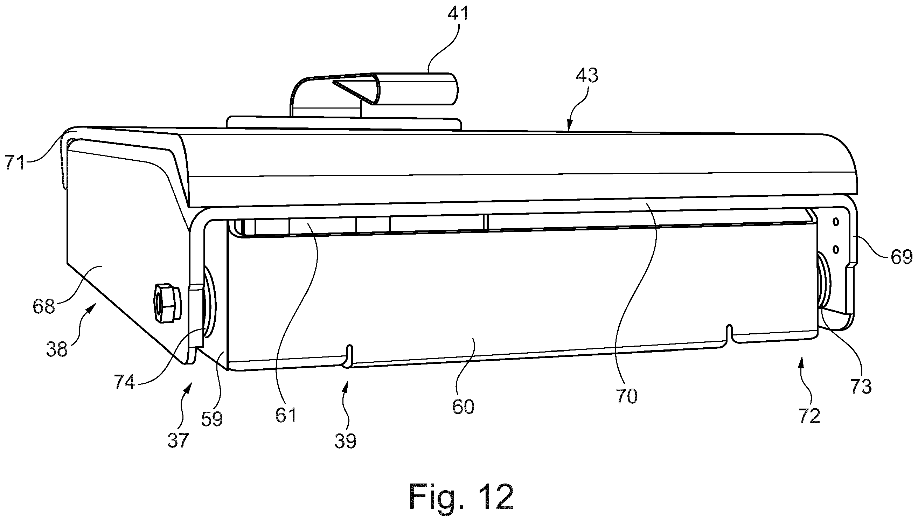

In Figur 12 ist die Vorrichtung 37 ohne verbleibende Teile der Beinauflage 29 dargestellt. Somit ist unter anderem die Grundstruktur 51 und damit das Hauptseitenelement 62 in Figur 12 nicht dargestellt. Ebenfalls nicht gezeigt sind seitliche Polsterelemente 66, 67 der ersten Gehäusehälfte 38 (siehe auch Figur 10). In Figur 12 gezeigt ist die zweite Gehäusehälfte 39 mit den kurzen Seitenelement 60 und dem langen Seitenelement 59. Weiter ist in Figur 12 die erste Gehäusehälfte 38 gezeigt, welche ein erstes langes Seitenelement 68 und ein zweites langes Seitenelement 69, sowie ein Hauptseitenelement 70 umfasst. Vorteilhafterweise sind die langen Seitenelemente 68, 69, sowie das Hauptseitenelement 70 der ersten Gehäusehälfte 38 einstückig vorhanden. Im angeordneten Zustand an der Beinauflage 29 sind an den langen Seitenelementen 68, 69 die Polsterelemente 66, 67 (siehe Figur 10) befestigt. Vorteilhafterweise ist am Hauptseitenelement 70 ein weiteres Polsterelement 71 befestigt.

Beispielsweise umfasst die Vorrichtung 37 eine Federvorrichtung 72, welche Federelemente 73 und 74 aufweist. Die Federelemente 73, 74 sind beispielsweise an den Schwenklagerachsen 63 bzw. 64 angeordnet. Vorteilhafterweise sind die Federelemente 73, 74 zwischen einem Seitenelement 58 bzw. 59 der zweiten Gehäusehälfte 39 und einem Seitenelement 68 bzw. 69 der ersten Gehäusehälfte 38 vorhanden. Beispielsweise ist die erste Gehäusehälfte 38 schwenkbeweglich an den langen Seitenelementen 58, 59 der zweiten Gehäusehälfte 39 angelenkt.

### Bezugszeichenliste

| | | | |
|---|---|---|---|
| 1 | Sitzreihe | | |
| 2 | Sitzrichtung | 40 | Verschlussmechanik |
| 3 - 4 | Fluggastsitz | 41 | Lasche |
| 5, 9 | Sitzboden | 42 - 43 | Nutzfläche |
| 6, 10 | Rückenlehne | 44 | Hohlraum |
| 7 | Umhausung | 45 | Schwimmweste |
| 8 , 12 | Beinauflage | 46 - 47 | Anbindungsorgan |
| 11 | Umhausung | 48 | Siegeleinrichtung |
| 13 | Stützbein | 49 - 50 | Öse |
| 14 | Kabinenboden | 51 | Grundstruktur |
| 15, 19 | Endbereich | 52 | Schlitz |
| 16, 20 | Strebe | 53 | Aussparung |
| 17 - 18 | Montagestelle | 54 | Außenseite |
| 21 | Verstrebungselement | 55 | Schlitz |
| 22 - 23 | Armlehne | 56 | Sichtelement |
| 24 | Konsole | 57 | Fixierungsorgan |
| 25 | Sitzreihe | 58 - 61 | Seitenelement |
| 26 - 27 | Fluggastsitz | 62 | Hauptseitenelement |
| 28 - 29 | Beinauflage | 63 - 64 | Schwenklagerachse |
| 30 - 31 | Sitzboden | 65 | Querbügel |
| 32 - 33 | Rückenlehne | 66 - 67 | Polsterelement |
| 34 | Stützbein | 68 - 69 | Seitenelement |
| 35 - 36 | Polster | 70 | Hauptseitenelement |
| 37 | Vorrichtung | 71 | Polsterelement |
| 38 - 39 | Gehäusehälfte | 72 | Federvorrichtung |
| | | 73 - 74 | Federelement |

## Patentansprüche

1. Beinauflage (29) für eine-sn Fluggastsitz (27), wobei die Beinauflage (29) eine Vorrichtung (37) aufweist, wobei die Vorrichtung (37) ein Gehäuse umfasst, wobei das Gehäuse eine erste und eine zweite Gehäusehälfte (38, 39) aufweist, wobei die beiden Gehäusehälften (38, 39) schwenkbeweglich miteinander verbunden sind, wobei das Gehäuse derart ausgebildet ist, dass eine Schwimmweste (45) für einen Fluggast darin verstaubar ist, wobei die Vorrichtung (37) an einer Grundstruktur (51) der Beinauflage (29) angeordnet ist, wobei die erste Gehäusehälfte (38) durch eine Federkraft einer Federvorrichtung (72) der Vorrichtung (37) gegenüber der zweiten Gehäusehälfte (39) kraftbeaufschlagt vorhanden ist, sodass die erste Gehäusehälfte (38) aus einer geöffneten Position relativ zur zweiten Gehäusehälfte (39) in Richtung einer geschlossenen Position relativ zur zweiten Gehäusehälfte (39) bewegbar ist.

2. Beinauflage (29) nach dem vorangegangenen Anspruch 1, wobei die beiden Gehäusehälften (38, 39) unlösbar miteinander verbunden sind.

3. Beinauflage (29) nach einem der vorangegangenen Ansprüche, wobei die Federvorrichtung (72) zwei Federelemente (73, 74) aufweist.

4. Beinauflage (29) nach einem der vorangegangenen Ansprüche, wobei jede Gehäusehälfte (38, 39) ein Hauptseitenelement (62, 70) aufweist, wobei an jedem der Hauptseitenelemente (62, 70) quer dazu abstehende Seitenelemente (58 - 61, 68, 69) vorhanden sind, wobei zwei Seitenelemente (58 - 61, 68, 69) einer Gehäusehälfte (58 - 61, 68, 69) voneinander beabstandet und gegenüberliegend ausgebildet sind, wobei ein Abstand von den zwei beabstandeten und gegenüberliegenden Seitenelementen (68, 69) einer ersten der Gehäusehälften (38) größer ist, als ein Abstand von den zwei beabstandeten und gegenüberliegenden Seitenelementen (58, 59) einer zweiten der Gehäusehälften (39), sodass in der geschlossenen Position der ersten Gehäusehälfte (38) , die Seitenelemente (58 - 61, 68, 69) der ersten und der zweiten Gehäusehälfte (38, 39) überlappend vorhanden sind.

5. Beinauflage (29) nach einem der vorangegangenen Ansprüche, wobei die Vorrichtung (37) eine Verschlussmechanik (40) aufweist, wobei die Verschlussmechanik (40) die beiden Gehäusehälften (38, 39) in der geschlossenen Position zueinander festlegt, wobei die Verschlussmechanik (40) ein Zugelement (41) umfasst, wobei die Verschlussmechanik (40) derart ausgebildet ist, dass durch Ziehen am Zugelement (41) Teile der Verschlussmechanik (40) derart bewegt werden, dass die Gehäusehälften (38, 39) im Bereich der Verschlussmechanik (40) voneinander gelöst sind.

6. Beinauflage (29) nach einem der vorangegangenen Ansprüche, wobei das Hauptseitenelement (62) der zweiten Gehäusehälfte (39) ein integraler Bestandteil der Grundstruktur (51) der Beinauflage (29) ist.

7. Beinauflage (29) nach einem der vorangegangenen Ansprüche, wobei die Vorrichtung (37) derart ausgebildet ist, dass in der geschlossenen Position der ersten Gehäusehälfte (38) die Federkraft der Federvorrichtung (72) die erste Gehäusehälfte (38) in Richtung einer geöffneten Position der ersten Gehäusehälfte (38) relativ zur zweiten Gehäusehälfte (39) drängt.

8. Beinauflage (29) nach einem der vorangegangenen Ansprüche, wobei die Vorrichtung (37) derart ausgebildet ist, dass in der geschlossenen Position der ersten Gehäusehälfte (38) die Federkraft der Federvorrichtung (72) die erste Gehäusehälfte (38) in Richtung der geschlossenen Position der ersten Gehäusehälfte (38) relativ zur zweiten Gehäusehälfte (39) drängt, sodass die Federkraft der Federvorrichtung (72) einer Bewegungskraft entgegenwirkt, welche aufzubringen ist, um die erste Gehäusehälfte (38) von der geschlossenen Position in eine geöffnete Position relativ zur zweiten Gehäusehälfte (39) zu bewegen.

9. Beinauflage (29) nach einem der vorangegangenen Ansprüche, wobei die Vorrichtung (37) derart ausgebildet ist, dass in einer geöffneten Position der ersten Gehäusehälfte (38) die Federkraft der Federvorrichtung (72) die erste Gehäusehälfte (38) in Richtung der geschlossenen Position der ersten Gehäusehälfte relativ zur zweiten Gehäusehälfte (39) drängt.

10. Beinauflage (29) nach einem der vorangegangenen Ansprüche, wobei die Vorrichtung (37) derart ausgebildet ist, dass die Federkraft der Federvorrichtung (72) die erste Gehäusehälfte (38) aus einer zweiten geöffneten Position relativ zur zweiten Gehäusehälfte (39) in Richtung der geschlossenen Position der ersten Gehäusehälfte (38) in eine erste geöffnete Position drängt.

11. Beinauflage (29) nach einem der vorangegangenen Ansprüche, wobei die Vorrichtung (37) derart ausgebildet ist, insbesondere dass die Federvorrichtung (72) derart ausgebildet ist, dass die erste Gehäusehälfte (38) aus einer geöffneten Position mittels der Federkraft in Richtung der geschlossenen Position bewegbar ist, wobei die erste Gehäusehälfte (38) mittels der Federkraft der Federvorrichtung (72) aus einer geöffneten Position nicht in die geschlossene Position bewegbar ist.

12. Fluggastsitz (27) mit einer Beinauflage (29) nach einem der vorangegangenen Ansprüche.

13. Sitzreihe (25) mit mindestens zwei Fluggastsitzen (26, 27) nach dem vorhergehenden Anspruch 12.

14. Flugzeug mit einem Fluggastsitz (26, 27) nach dem vorangegangenen Anspruch 12 oder mit einer Sitzreihe (25) nach dem vorangegangenen Anspruch 13 oder mit einer Beinauflage (29) nach einem der vorangegangenen Ansprüche 1 bis 11.

## Claims

1. Legrest (29) for an aircraft passenger seat (27), wherein the legrest (29) has a device (37), wherein the device (37) comprises a housing, wherein the housing has a first and a second housing half (38, 39), wherein the two housing halves (38, 39) are pivotably movably connected to one another, wherein the housing is designed in such a way that a lifejacket (45) for an aircraft passenger can be stowed therein, wherein the device (37) is arranged on a basic structure (51) of the legrest (29), wherein the first housing half (38) is subjected to a spring force of a spring device (72) of the device (37) with respect to the second housing half (39), with the result that the first housing half (38) can be moved from an open position relative to the second housing half (39) toward a closed position relative to the second housing half (39).

2. Legrest (29) according to the preceding Claim 1, wherein the two housing halves (38, 39) are nondetachably connected to one another.

3. Legrest (29) according to either of the preceding claims, wherein the spring device (72) has two spring elements (73, 74).

4. Legrest (29) according to one of the preceding claims, wherein each housing half (38, 39) has a main side element (62, 70), wherein side elements (58-61, 68, 69) protruding transversely in relation thereto are present on each of the main side elements (62, 70), wherein two side elements (58-61, 68, 69) of one housing half (58-61, 68, 69) are spaced apart from one another and are situated opposite one another, wherein a spacing between the two spaced-apart and oppositely situated side elements (68, 69) of a first one of the housing halves (38) is greater than a spacing between the two spaced-apart and oppositely situated side elements (58, 59) of a second one of the housing halves (39), such that the side elements (58-61, 68, 69) of the first and the second housing half (38, 39) overlap in the closed position of the first housing half (38).

5. Legrest (29) according to one of the preceding claims, wherein the device (37) has a closure mechanism (40), wherein the closure mechanism (40) fixes the two housing halves (38, 39) in place in relation to one another in the closed position, wherein the closure mechanism (40) comprises a pulling element (41), wherein the closure mechanism (40) is designed in such a way that, by pulling on the pulling element (41), parts of the closure mechanism (40) are moved in such a way that the housing halves (38, 39) are detached from one another in the region of the closure mechanism (40).

6. Legrest (29) according to one of the preceding claims, wherein the main side element (62) of the second housing half (39) is an integral component of the basic structure (51) of the legrest (29).

7. Legrest (29) according to one of the preceding claims, wherein the device (37) is designed in such a way that, in the closed position of the first housing half (38), the spring force of the spring device (72) urges the first housing half (38) toward an open position of the first housing half (38) relative to the second housing half (39).

8. Legrest (29) according to one of the preceding claims, wherein the device (37) is designed in such a way that, in the closed position of the first housing half (38), the spring force of the spring device (72) urges the first housing half (38) toward the closed position of the first housing half (38) relative to the second housing half (39), with the result that the spring force of the spring device (72) counteracts a movement force to be applied in order to move the first housing half (38) from the closed position into an open position relative to the second housing half (39).

9. Legrest (29) according to one of the preceding claims, wherein the device (37) is designed in such a way that, in an open position of the first housing half (38), the spring force of the spring device (72) urges the first housing half (38) toward the closed position of the first housing half relative to the second housing half (39) .

10. Legrest (29) according to one of the preceding claims, wherein the device (37) is designed in such a way that the spring force of the spring device (72) urges the first housing half (38) from a second open position relative to the second housing half (39) toward the closed position of the first housing half (38) into a first open position.

11. Legrest (29) according to one of the preceding claims, wherein the device (37) is designed in such a way, in particular wherein the spring device (72) is designed in such a way, that the first housing half (38) can be moved from an open position toward the closed position by means of the spring force, wherein the first housing half (38) cannot be moved into the closed position from an open position by means of the spring force of the spring device (72).

12. Aircraft passenger seat (27) with a legrest (29) according to one of the preceding claims.

13. Seat row (25) having at least two aircraft passenger seats (26, 27) according to the preceding Claim 12.

14. Aircraft having an aircraft passenger seat (26, 27) according to the preceding Claim 12 or having a seat row (25) according to the preceding Claim 13 or having a legrest (29) according to one of the preceding Claims 1 to 11.

## Revendications

1. Repose-jambes (29) pour un siège passager d'aéronef (27), le repose-jambes (29) présentant un dispositif (37), le dispositif (37) comprenant un boîtier, le boîtier présentant une première et une deuxième moitié de boîtier (38, 39), les deux moitiés de boîtier (38, 39) étant reliées l'une à l'autre de manière pivotante, le boîtier étant réalisé de telle sorte qu'un gilet de sauvetage (45) pour un passager d'aéronef peut être stocké dans celui-ci, le dispositif (37) étant disposé sur une structure de base (51) du repose-jambes (29), la première moitié de boîtier (38) étant soumise à une force de ressort d'un dispositif à ressorts (72) du dispositif (37) par rapport à la deuxième moitié de boîtier (39), de sorte que la première moitié de boîtier (38) soit déplaçable à partir d'une position ouverte par rapport à la deuxième moitié de boîtier (39) en direction d'une position fermée par rapport à la deuxième moitié de boîtier (39).

2. Repose-jambes (29) selon la revendication précédente 1,
les deux moitiés de boîtier (38, 39) étant reliées l'une à l'autre de manière inséparable.

3. Repose-jambes (29) selon l'une des revendications précédentes,
le dispositif à ressorts (72) présentant deux éléments ressorts (73, 74).

4. Repose-jambes (29) selon l'une des revendications précédentes,
chaque moitié de boîtier (38, 39) présentant un élément latéral principal (62, 70) et, sur chacun des éléments latéraux principaux (62, 70), des éléments latéraux (58 - 61, 68, 69) faisant saillie transversalement par rapport à ceux-ci étant présents, deux éléments latéraux (58 - 61, 68, 69) d'une moitié de boîtier (58 - 61, 68, 69) étant réalisés de manière espacée l'un de l'autre et de manière opposée, une distance entre les deux éléments latéraux (68, 69) espacés et opposés d'une première des moitiés de boîtier (38) étant supérieure à une distance entre les deux éléments latéraux (58, 59) espacés et opposés d'une deuxième des moitiés de boîtier (39), de sorte que, dans la position fermée de la première moitié de boîtier (38), les éléments latéraux (58 - 61, 68, 69) de la première et de la deuxième moitié de boîtier (38, 39) soient présents en chevauchement.

5. Repose-jambes (29) selon l'une des revendications précédentes,
le dispositif (37) présentant un mécanisme de fermeture (40), le mécanisme de fermeture (40) fixant les deux moitiés de boîtier (38, 39) l'une par rapport à l'autre dans la position fermée, le mécanisme de fermeture (40) comprenant un élément de traction (41), le mécanisme de fermeture (40) étant réalisé de telle sorte que, par traction sur l'élément de traction (41), des parties du mécanisme de fermeture (40) sont déplacées de telle sorte que les moitiés de boîtier (38, 39) soient séparées l'une de l'autre dans la région du mécanisme de fermeture (40).

6. Repose-jambes (29) selon l'une des revendications précédentes,
l'élément latéral principal (62) de la deuxième moitié de boîtier (39) faisant partie intégrante de la structure de base (51) du repose-jambes (29).

7. Repose-jambes (29) selon l'une des revendications précédentes,
le dispositif (37) étant réalisé de telle sorte que, dans la position fermée de la première moitié de boîtier (38), la force de ressort du dispositif à ressorts (72) pousse la première moitié de boîtier (38) en direction d'une position ouverte de la première moitié de boîtier (38) par rapport à la deuxième moitié de boîtier (39).

8. Repose-jambes (29) selon l'une des revendications précédentes,
le dispositif (37) étant réalisé de telle sorte que, dans la position fermée de la première moitié de boîtier (38), la force de ressort du dispositif à ressorts (72) pousse la première moitié de boîtier (38) en direction de la position fermée de la première moitié de boîtier (38) par rapport à la deuxième moitié de boîtier (39), de sorte que la force de ressort du dispositif à ressorts (72) s'oppose à une force de déplacement, laquelle doit être appliquée afin de déplacer la première moitié de boîtier (38) de la position fermée à une position ouverte par rapport à la deuxième moitié de boîtier (39).

9. Repose-jambes (29) selon l'une des revendications précédentes,
le dispositif (37) étant réalisé de telle sorte que, dans une position ouverte de la première moitié de boîtier (38), la force de ressort du dispositif à ressorts (72) pousse la première moitié de boîtier (38) en direction de la position fermée de la première moitié de boîtier par rapport à la deuxième moitié de boîtier (39).

10. Repose-jambes (29) selon l'une des revendications précédentes,
le dispositif (37) étant réalisé de telle sorte que la force de ressort du dispositif à ressorts (72) pousse la première moitié de boîtier (38) à partir d'une deuxième position ouverte par rapport à la deuxième moitié de boîtier (39) en direction de la position fermée de la première moitié de boîtier (38) dans une première position ouverte.

11. Repose-jambes (29) selon l'une des revendications précédentes,
le dispositif (37) étant réalisé de telle sorte que, en particulier le dispositif à ressorts (72) étant réalisé de telle sorte que la première moitié de boîtier (38) est déplaçable à partir d'une position ouverte au moyen de la force de ressort en direction de la position fermée, la première moitié de boîtier (38) n'étant pas déplaçable dans la position fermée à partir d'une position ouverte au moyen de la force de ressort du dispositif à ressorts (72) .

12. Siège passager d'aéronef (27) comportant un repose-jambes (29) selon l'une des revendications précédentes.

13. Rangée de sièges (25) comportant au moins deux sièges passagers d'aéronef (26, 27) selon la revendication précédente 12.

14. Aéronef comportant un siège passager d'aéronef (26, 27) selon la revendication précédente 12 ou comportant une rangée de sièges (25) selon la revendication précédente 13 ou comportant un repose-jambes (29) selon l'une des revendications précédentes 1 à 11.
